# EUROPÄISCHE PATENTSCHRIFT

(11) **EP 4 298 057 B1**
(45) Veröffentlichungstag und Bekanntmachung des Hinweises auf die Patenterteilung: **25.02.2026**
(21) Anmeldenummer: 22701888.4
(22) Anmeldetag: 12.01.2022
(51) Int. Cl.: C04B 28/10, C04B 20/02, C01F 5/24, C01B 32/60, C04B 35/00, B01D 53/62

(54) **SEQUESTRIERUNG VON CO**
SEQUESTRATION OF CO2
SÉQUESTRATION DE CO2

(43) Veröffentlichungstag der Anmeldung: 03.01.2024
(73) Patentinhaber: OLIMENT ® GmbH, 04571 Rötha OT Espenhain (DE)
(72) Erfinder: BELLMANN, Frank, 99425 Weimar (DE)
(74) Vertreter: Wunderlich & Heim Patentanwälte PartG mbB
(86) Internationale Anmeldenummer: PCT/EP2022/050562
(87) Internationale Veröffentlichungsnummer: WO 2023/134849

(56) Entgegenhaltungen:
- WO-A1-2008/061305
- WO-A1-2013/131193
- WO-A2-2010/097451
- CA-A1- 2 687 618
- CN-A- 107 963 903
- CN-A- 108 821 686
- CN-A- 111 892 366
- US-A1- 2007 261 947
- US-A1- 2017 029 284
- GERDEMANN S J ET AL: "Ex Situ Aqueous Mineral Carbonation", ENVIRONMENTAL SCIENCE & TECHNOLOGY, AMERICAN CHEMICAL SOCIETY, US, vol. 41, no. 7, 1 March 2007 (2007-03-01), pages 2587 - 2593, XP002528030, ISSN: 0013-936X, [retrieved on 20070301], DOI: 10.1021/ES0619253
- LOUIS-CÉSAR PASQUIER ET AL: "Parameters optimization for direct flue gas CO 2 capture and sequestration by aqueous mineral carbonation using activated serpentinite based mining residue", APPLIED GEOCHEMISTRY, vol. 50, 1 November 2014 (2014-11-01), AMSTERDAM, NL, pages 66 - 73, XP055651304, ISSN: 0883-2927, DOI: 10.1016/j.apgeochem.2014.08.008
- MAROTO-VALER M M ET AL: "Activation of magnesium rich minerals as carbonation feedstock materials for CO"2 sequestration", FUEL PROCESSING TECHNOLOGY, ELSEVIER BV, NL, vol. 86, no. 14-15, 1 October 2005 (2005-10-01), pages 1627 - 1645, XP027621857, ISSN: 0378-3820, [retrieved on 20051001]
- AH-HYUNG ALISSA PARK ED - AH-HYUNG ALISSA PARK: "Disseratation: Carbon Dioxide Sequestration: Chemical and Physical Activation of Aqueous Carbonation of Mg-bearing Minerals and pH Swing Process", INTERNET CITATION, 1 January 2005 (2005-01-01), pages I - XX, XP002677518, Retrieved from the Internet <URL:http://etd.ohiolink.edu/send-pdf.cgi/Park%20AhHyung%20Alissa.pdf?osu1124272324> [retrieved on 20120704]
- BOGDAN Z. DLUGOGORSKI ET AL: "Dehydroxylation of serpentine minerals: Implications for mineral carbonation", RENEWABLE AND SUSTAINABLE ENERGY REVIEWS, vol. 31, 31 December 2013 (2013-12-31), US, pages 353 - 367, XP055395708, ISSN: 1364-0321, DOI: 10.1016/j.rser.2013.11.002
- MCKELVY M J ET AL: "Simultaneous Mechanical and Heat Activation: A New Route to Enhance Serpentine Carbonation Reactivity and Lower CO2 Mineral Sequestration Process Cost", TECHNICAL REPORT OF THE ARIZONA STATE UNIVERSITY, ARIZONA STATE UNIVERSITY, USA, vol. DE-FG26-02NT41546, no. FG26-02NT41546, 1 January 2005 (2005-01-01), pages 1 - 21, XP009539190, DOI: 0.2172/840464
- AKIN ALTUN I ET AL: "Study on steel furnace slags with high MgO as additive in Portland cement", vol. 32, no. 8, 1 August 2002 (2002-08-01), pages 1247 - 1249, XP009540063, ISSN: 0008-8846, Retrieved from the Internet <URL:https://api.elsevier.com/content/article/PII:S0008884602007639?httpAccept=text/plain> DOI: 10.1016/S0008-8846(02)00763-9

## Beschreibung

Die Erfindung betrifft ein Verfahren zur Sequestrierung von CO₂.

Kohlendioxid (CO₂) wirkt in der Atmosphäre als Treibhausgas und wird als eine der Hauptursachen für die von Menschen verursachte globale Erwärmung angesehen. Neben der grundsätzlichen Reduktion von CO₂-Emissionen wird parallel dazu versucht, bereits in der Atmosphäre befindliches CO₂ zu binden. Das Binden von CO₂ kann auch verwendet werden, um Herstellungsverfahren, bei denen eine große Menge an CO₂ entsteht, wie etwa bei der Zementherstellung, CO₂-neutral zu gestalten.

Unter Sequestrierung von CO₂ versteht man insbesondere CO₂ aus der Atmosphäre zu entfernen, idealerweise derart, dass das CO₂ mit anderen Stoffen verbunden wird, dass es nicht wieder entweichen kann. Hierzu sind verschiedenste Vorschläge bekannt. Eine Möglichkeit liegt hierbei darin Olivin zu verwenden.

Bei Olivin handelt es sich um ein Mineral der allgemeinen Zusammensetzung A₂[SiO₄], wobei für A verschiedene zweiwertige Ionen auftreten können wie Magnesium (Forsterit, Mg₂SiO₄), Eisen (Fe₂SiO₄, Fayalit), Mangan (Mn₂SiO₄, Tephroit) sowie weitere Ionen und eine Kombination der verschiedenen Kationen, da es sich bei Olivin um eine Mischkristallserie handelt.

Die Patentliteratur zur Beschleunigung einer Sequestrierung von Kohlendioxid bei einer Reaktion mit Olivin ist sehr umfangreich. Viele Verfahren zur Sequestrierung von CO₂ unter Verwendung von Olivin beruhen auf dem folgenden Prinzip und unterscheiden sich hauptsächlich in der Art und Weise der Reaktionsbeschleunigung.

Mg₂SiO₄ + 2 CO₂ → 2 MgCO₃ + SiO₂

Nach der WO 2007/069902 soll die Reaktion durch Mahlung und Einstellung bestimmter pH-Werte beschleunigt werden, die WO 2008/140821 und die WO2008/061305 schlagen ein Beschleunigen der Reaktion durch hohe Temperaturen, hohe CO₂-Partialdrücke und hohe Feinheit des Olivins vor. Die WO 2008/101293 schlägt eine Ammoniumzugabe, die WO 2007/106883 die Zugabe einer Base und die US 4944928 die Zugabe von Salzsäure vor.

Neben diesen Verfahren gibt es eine große Anzahl weiterer Verfahren, die in der Lage sind, die Sequestrierung von Kohlendioxid bei der Reaktion mit Olivin zu beschleunigen, wobei alle diese Verfahren komplizierte Technologien sowie teure Ausgangsstoffe verwenden.

In dem CO2min-Projekt wurde versucht, eine solche Karbonatisierung von Olivin mit der Zementherstellung zu verbinden. Das Ziel ist eine Abscheidung der CO₂-Emissionen der Zementindustrie durch Karbonatisierung von Olivin. Demzufolge wird die Zementherstellung unverändert fortgeführt unter Beibehaltung des vorhandenen Hochtemperaturprozesses. Das dabei entstehende Kohlendioxid wird durch eine Reaktion mit Olivin in Form von Magnesiumkarbonat und SiO₂ gebunden. Dieser Anfallstoff kann dann dem Zement zugegeben und somit entsorgt werden. Allerdings ist es offensichtlich nicht möglich, den Olivin vollständig in Magnesiumkarbonat umzusetzen, vgl. D. Kremer, H. Wotruba: Separation of products from mineral sequestration of CO2 with primary and secondary materials. Minerals, Band 10 (2020), 1098 ff*.* Dafür wurden in dem Projekt sehr hohe CO₂-Partialdrücke (17 bar) und hohe Temperaturen (175°C) verwendet. Trotz der Autoklavbehandlung betrug der Umsatzgrad des Olivins lediglich 23% und man bräuchte sehr große Olivinmengen, um den geringen Umsatzgrad zu kompensieren. Auch die gewählte Prozesstechnologie ist wohl nicht geeignet, Kohlendioxid im industriellen Maßstab zu binden.

Eine weitere Idee zum Binden von Kohlendioxid durch eine Reaktion mit Olivin wurde ebenfalls in den Niederlanden entwickelt, vgl. R. D. Schuiling, P. Krijgsman: Enhanced weathering: An effective and cheap tool to sequester CO2. Climate change, Band 74 (2006), 349-354. Dabei wird Olivin auf Ackerflächen ausgestreut oder an Stränden verteilt. Wenn eine Auflösung des Olivins in Magnesiumionen erfolgt, könnte das Niederschlags- beziehungsweise Meerwasser gleichzeitig Kohlendioxid in Form von HCO₃⁻ Ionen nach der folgenden Gleichung aufnehmen.

Mg₂SiO₄ + 4 CO₂ + 2 H₂O → 2Mg²⁺ + 4 HCO₃⁻ + SiO₂

Allerdings zeigte ein Laborversuch der Universität Hamburg, dass die beschriebene Reaktion nicht in der dargestellten Form abläuft. Selbst wenn man die gesamte Ackerfläche der Welt mit Olivin bestreuen würde, könnte man lediglich 0,2% der globalen Kohlendioxidemissionen abscheiden, vgl. T. Amann et al.: Enhanced weathering and related element fluxes- a cropland mesocosm approach. Biogeosciences, Band 17 (2020), 103-109*.*

WO 2008/061305 A1 offenbart ein schrittweises Verfahren zur Sequestrierung von CO2 unter Einsatz von Serpentin als Ausgangsmaterial; der Serpentin durchläuft dabei nicht den Zwischenschritt der hydrothermalen Umwandlung bevor er entwässert und anschliessend karbonatisiert wird.

Der Erfindung liegt daher die **Aufgabe** zugrunde, ein effizientes Verfahren zur Sequestrierung von CO₂ anzugeben.

Diese Aufgabe wird erfindungsgemäß durch ein Verfahren mit den Merkmalen des Anspruchs 1 gelöst.

Weitere vorteilhafte Ausführungen sind in den abhängigen Ansprüchen, der weiteren Beschreibung und den Ausführungsbeispielen angegeben.

Entsprechend Anspruch 1 ist vorgesehen, dass zunächst ein Ausgangsprodukt bereitgestellt wird, welches mindestens 20 Mass%, bevorzugt mindestens 40 Mass%, bevorzugter mindestens 60 Mass%, noch weiter bevorzugt mindestens 80 Mass%, eines oder mehrere der folgenden Bestandteile aufweist. Diese Bestandteile können ultramafische Gesteine, wie Dunit, Verwitterungsprodukte ultramafischer Gesteine, wie Serpentinit, Olivin oder industrielle Anfallstoffe sein. Wesentlich ist hierbei, dass all diese Rohstoffe jeweils eine MgO-Konzentration beziehungsweise einen MgO Anteil von mindestens 10 Mass%, bevorzugt 20 Mass% und noch bevorzugter über 30 Mass% und idealerweise über 40 Mass% aufweisen. Dieses Ausgangsprodukt wird mit einer Feinheit entsprechend einer BET-Oberfläche von 0,1 m²/g oder feiner bereitgestellt. Vorteilhaft ist herbei eine BET-Oberfläche von 0,5 m²/g, noch bevorzugter einer BET-Oberfläche von 1,0 m²/g oder noch feiner.

Ein wichtiges Mineral in ultramafischen Gesteinen ist Olivin. Dabei handelt es sich um eine Mischkristallreihe zwischen Fayalit (Fe₂SiO₄), Forsterit (Mg₂SiO₄), Tephroit (Mn₂SiO₄) und anderen Mineralien der Form A₂[SiO₄]. Natürliche Olivinvorkommen sind dokumentiert und häufig handelt es sich bei dem Olivin um ein magnesiumreiches Material mit Eisenanteilen.

Beispiele für industrielle Anfallstoffe, die im Rahmen der Erfindung verwendet werden können, sind Gießereisand oder Feuerfestmaterialien.

Nach der Bereitstellung des Ausgangsproduktes folgt eine Homogenisierung des Ausgangsproduktes, sofern dies notwendig ist. Bei den angeführten möglichen Bestandteilen des Ausgangsproduktes handelt es sich oft um natürliche Gesteine oder Materialien aus natürlichen Lagerstätten. Diese liegen erfahrungsgemäß weder in Reinform noch homogenisiert vor. Das Homogenisieren kann beispielsweise mit einem Mischer oder gleichzeitig beim Zerkleinern auf die gewünschte Feinheit durchgeführt werden.

Im Anschluss an das Homogenisieren wird das derart vorbereitete Ausgangsprodukt hydro-thermal behandelt. Dies findet in einer Wärmebehandlungseinrichtung bei einer Temperatur von über 100 °C für mindestens 24 Stunden statt. Bei der Wärmebehandlungseinrichtung kann es sich beispielsweise um einen Wärmetunnel, aber auch um einen Autoklav handeln. Unter Autoklav wird meist ein gasdicht verschließbarer Druckbehälter, der für die thermische Behandlung von Stoffen im Überdruckbereich eingesetzt werden kann, verstanden. Es ist bevorzugt, wenn als Wärmebehandlungseinrichtung ein Gefäß, eine Kombination von Einrichtungen, wie ein Ofen und eine dichte Form, oder eine Einrichtung zum Einschließen eines Volumens verstanden werden. Die Behandlung findet bevorzugt bei Temperaturen über 100 °C, insbesondere über 150 °C und noch bevorzugter über 250 °C statt. Vorteilhaft für eine gute Umsetzung ist es, wenn die Behandlung länger als 36 Stunden, noch bevorzugter länger als 48 Stunden, durchgeführt wird. Besonders gute Ergebnisse können aber erreicht werden, wenn die Behandlung noch länger über mehrere Tage beispielsweise 4, bevorzugter 7 Tage oder länger durchgeführt wird.

Ferner ist eine Wasserzugabe zu dem homogenisierten Ausgangsprodukt durch direkte Wasserzugabe vor, nach und/oder zeitgleich mit dem Homogenisieren im vorhergehenden Schritt und ein Vermischen des Wassers mit dem Ausgangsprodukt vorgesehen. Alternativ oder zusätzlich kann auch Wasserdampf in die Wärmebehandlungseinrichtung eingebracht werden.

Während der hydro-thermalen Behandlung des homogenisierten Ausgangsproduktes wandelt sich dieses zumindest teilweise durch die Anwesenheit von H₂O in Magnesiumhydroxid (Mg(OH)₂) und Magnesiumsilikathydrate (Mg₃Si₂O₅(OH)₄, Mg₃Si₄O₁₀(OH)₂) um. Die herbei zugrunde liegenden Reaktionen sind wie folgt, wobei diese hier vereinfacht ausgehend von Forsterit (Mg₂SiO₄) angegeben sind:

(1) 2 Mg₂SiO₄ + 3 H₂O → Mg₃Si₂O₅(OH)₄ + Mg(OH)₂

(2) 3 Mg₂SiO₄ + 5 SiO₂ + 2 H₂O → 2 Mg₃Si₄O₁₀(OH)₂

wobei primär Reaktion (1) abläuft. Dies wird im Rahmen der Erfindung auch bevorzugt, da Mg₃Si₂O₅(OH)₄ besser zum Binden von CO₂ geeignet ist als Mg₃Si₄O₄₀(OH)₂. Ferner ist zu berücksichtigen, dass die Menge der jeweiligen Produkte und deren Verhältnis unter anderem von der exakten Zusammensetzung des Ausgangsproduktes abhängig ist.

Das Magnesiumhydroxid (Mg(OH)₂) kann hierbei als Brucit vorliegen. Das Magnesiumsilikathydrat (Mg₃Si₂O₅(OH)₄, Mg₃Si₄O₁₀(OH)₂) kann in Form von Lizardit, Antigorit, Talk und anderen Formen vorliegen. Hierbei ist zu berücksichtigen, dass der stöchiometrische Wassergehalt teilweise geringer ist - im Bereich von 13 Mass% bei Antigorit - als der durch Versuchen ermittelbare - im Bereich von 16 Mass% bis 20 Mass%. Dies kann damit begründet werden, dass die Materialen zum Teil so fein sind, dass auch an deren Oberfläche Wasser anhaften kann.

In ähnlicher Weise gelten derartige Abweichungen von der Stöchiometrie auch für das Verhältnis zwischen Mg und Si. Weiterhin können auch Fremdionen, wie Fe, in den Reaktionsprodukten eingebaut sein. Es können aber auch noch weitere Reaktionsprodukte wie beispielsweise Hydromagnesit, Hämatit, Magnetit oder Gibbsit entstehen. Dies ist jeweils abhängig von der exakten Zusammensetzung des Ausgangsproduktes. Alle oder ein Teil der Reaktionsprodukte können Eisen, Karbonat und Alkalien oder andere Fremdionen enthalten

Anschließend wird das umgewandelte Ausgangsprodukt mittels thermischer Behandlung und/oder Reaktionsmahlen zumindest teilweise von gebundenem Wasser entwässert. Gebundenes Wasser wird zum Teil auch als Kristallwasser bezeichnet. Es ist von ungebundenem Wasser, welches als freies H₂O angesehen werden kann, abzugrenzen. Eine vollkommene Entwässerung kann durch hohen Aufwand erreicht werden. Entsprechend der Erfindung sollte der Wassergehalt von gebundenem Wasser um mindestens 60%, bevorzugt mindestes um 80%, noch weiter bevorzugt um mindestens 90%, reduziert werden

Zur thermischen Behandlung kann das umgewandelte Ausgangsprodukt auf eine Temperatur zwischen 180 °C und 1000 °C erhitzt werden. Hierbei reicht je nach vorliegender Feinheit bereits ein Erhitzen für wenige Minuten aus. Bevorzugt sind Temperaturen zwischen 300 °C und 800 °C, noch vorteilhafter zwischen 500 °C und 700 °C. Alternativ oder zusätzlich kann das umgewandelte Ausgangsprodukt auch einer Reaktionsmahlung zur Umordnung der Kristallstrukturen unterzogen werden. Beim sogenannten Reaktionsmahlen kann durch eine Umordnung der Kristallstrukturen ebenfalls kristallines Wasser aus dem umgewandelten Ausgangsprodukt entfernt werden. Hierzu können Hilfsstoffe wie beispielweise Quarz zur Mahlung hinzugegeben werden.

Durch das Entwässern wird in diesem Schritt im umgewandelten Ausgangsprodukt vorhandenes Magnesiumhydroxid (Mg(OH)₂) zumindest teilweise in Magnesiumoxid (MgO) sowie vorhandenes Magnesiumsilikathydrat (Mg₃Si₂O₅(OH)₄, Mg₃Si₄O₁₀(OH)₂) zumindest teilweise in entwässertes Magnesiumsilikathydrat, welches vereinfacht als xMgO·SiO₂·yH₂O dargestellt werden kann, umgewandelt. Das Entwässern bezieht sich hierbei auf die Reduzierung des kristallinen Wassers beziehungsweise des Kristallwassers im umgewandelten Ausgangsprodukt.

Die hier zugrunde liegenden chemischen Abläufe sind, wiederum vereinfacht, wie folgt:

(3) Mg(OH)₂ → MgO + H₂O

(4) Mg₃Si₂O₅(OH)₄ → 2 xMgO·SiO₂·yH₂O + z H₂O

(5) Mg₃Si₄O₁₀(OH)₂ → 2 aMgO·SiO₂·bH₂O + c H₂O

wobei bei (4) ein weitgehend amorphes Reaktionsprodukt mit einem Mg zu Si Verhältnis von 1,5 bis 2 und einem gebunden Wasserhalt von etwa 3% entsteht. Das in Gleichung (5) entstehende Reaktionsprodukt hat ein noch geringeres Mg zu Si Verhältnis.

Daher auch die Variablen a, b, c, x, y und z. Dies ist jeweils abhängig von der exakten Zusammensetzung des Ausgangsproduktes und den Behandlungsparametern.

Nach der Entwässerung liegt der Wassergehalt des gebundenen Wassers im umgewandelten, entwässerten Ausgangsproduktes bevorzugt unter 10 Mass%, vorteilhafterweise unter 5 Mass%, noch bevorzugter unter 3,5 Mass%, noch weiter bevorzugt unter 2,5 Mass%.

Das umgewandelte und entwässerte Ausgangsprodukt liegt somit als mehrphasiges Produkt vor. Weitere mögliche Nebenphasen sind Hämatit, Magnetit, Enstatit, Feldspäte, Pyroxene, Quarz und amorphe Phasen.

Anschließend an das Entwässern des umgewandelten Ausgangsproduktes wird dieses mit CO₂ kontaktiert. Hierbei reagiert das CO₂ mit dem vorhandenen Magnesiumoxid (MgO), dem vorhandenen entwässerten Magnesiumsilikathydrat (xMgO·SiO₂·yH₂O) und/oder dem vorhandenen Magnesiumhydroxid (Mg(OH)₂). Das CO₂ wird hauptsächlich in entstehendem Magnesiumkarbonat (MgCO₃) und/oder Magnesiumkarbonathydrat (MgCO₃·mH₂O) gebunden.

Die zugrunde liegenden chemischen Abläufe sind vereinfacht und verallgemeinert ausgedrückt wie folgt:

(6) MgO + CO₂ + m H₂O → MgCO₃·mH₂O

(7) xMgO·SiO₂·yH₂O + q H₂O + x CO₂ → xMgCO₃·(q+y)/xH₂O + SiO₂

(8) Mg₂SiO₄ + 2 CO₂ + 2n H₂O → 2 MgCO₃·nH₂O + SiO₂

(9) Mg(OH)₂ + CO₂ + p-1 H₂O → MgCO₃·pH₂O

wobei m, n, p, q, x und y entsprechende Variablen darstellen. Diese können teilweise Null sein. Ferner ist zu berücksichtigen, dass in Gleichung (7) das entwässerte Magnesiumsilikathydrat nur noch als xMgO·SiO₂·yH₂O auftritt, da es (unvollständig) entwässert wurde. In Gleichung (8) ist Forsterit (Mg₂SiO₄) angeführt, der noch vorhanden sein kann. Es kann noch Forsterit aus dem Ausgangsstoff zu diesem Zeitpunkt vorhanden sein. Weiterhin ist zu berücksichtigen, dass das xMgO·SiO₂·yH₂O dem Forsterit sehr ähnlich ist und vereinfacht als amorpher Forsterit angesehen werden kann.

Sofern ein Ausgangsprodukt bereitgestellt wird, welches bereits mindestens 20 Mass% Magnesiumsilikathydrat, bevorzugt mindestens 40 Mass%, bevorzugter mindestens 60 Mass%, noch bevorzugter mindestens 80 Mass%, aufweist, wie es beispielsweise bei Serpentinit der Fall ist, kann auf die Schritte der Wasserzugabe und der hydro-thermalen Behandlung verzichtet werden (nicht erfindungsgemäß). Serpentinit ist ein metamorphes Gestein, welches durch natürliche Umwandlung, insbesondere Verwitterung, von ultramafischen Gesteinen entsteht.

Entsprechend der Erfindung wurde erkannt, dass durch die Kombination einer hydrothermalen Behandlung und des Austreibens von Kristallwasser aus natürlichen Materialien, wie ultramafischen Gesteinen, ein Zwischenstoff erzeugt werden kann, der geeignet ist, CO₂ in hohem Maße zu binden.

Zu den olivinreichen Gesteinen, welche nach der Erfindung verwendet werden können, gehören beispielsweise Dunit, Wehrlit, Habsburgit. Diese Gesteine haben häufig einen geringen Verwitterungsgrad. Es können aber auch verwitterte Gesteine mit einer ähnlichen chemischen Zusammensetzung, bei einem höheren Wassergehalt, eingesetzt werden. Bei den verwitterten Gesteinen handelt es sich zum Beispiel um Serpentinit.

Auf diese Weise können große Mengen von CO₂ mit relativ geringem Energieaufwand gebunden werden. Beispielsweise ist es möglich, mit ca. 1 t Forsterit mittels des erfin-dungsgemäßen Verfahrens ca. 0,6 t CO₂ innerhalb von wenigen Stunden zu binden.

Die hydro-thermale Behandlung des homogenisierten Ausgangsproduktes zur Umwandlung in Magnesiumhydroxid und/oder Magnesiumsilikathydrat ist einer der Verfahrensschritte, der entsprechend der Erfindung die längste Zeit in Anspruch nimmt. Daher ist es bevorzugt, wenn eine oder mehrere Behandlungen zur Beschleunigung der ablaufenden Reaktionen, während der hydro-thermalen Behandlung durchgeführt werden. Hierzu bieten sich verschiedene Behandlungsmethoden an, die einzeln oder auch in Kombination miteinander ausgeführt werden können. Diese werden im Folgenden näher erläutert. Hierbei können alle aber auch nur einige ausgewählte der aufgeführten Behandlungsmethoden miteinander kombiniert werden.

Eine Möglichkeit besteht darin, während der hydro-thermalen Behandlung oder zwischen mehreren hydro-thermalen Behandlungen in der Wärmebehandlungseinrichtung das homogenisierte Ausgangsprodukt zur Beschleunigung der Umwandlung kontinuierlich oder diskontinuierlich zu zerkleinern beziehungsweise aufzubrechen, insbesondere feinst zu mahlen.

Durch die kontinuierliche oder diskontinuierliche Zerkleinerung kann ein Verklumpen beziehungsweise Verwachsen der vorliegenden Stoffe, während der hydro-thermalen Behandlung verhindert oder reduziert werden. Dies sorgt dafür, dass weiterhin eine ausreichend große Oberfläche vorhanden ist, damit die oben beschriebenen Prozesse ablaufen können. Zur exakten Ausführung sind mehrere Möglichkeiten vorhanden.

Zum einen ist es möglich, die hydro-thermale Behandlung abzubrechen, das Material aus der Wärmebehandlungseinrichtung herauszufördern und zu zerkleinern beziehungsweise aufzubrechen, beispielsweise zu mahlen, und erneut der Wärmebehandlungseinrichtung zuzuführen.

Zum anderen ist es auch möglich, in der Wärmebehandlungseinrichtung eine entsprechende Zerkleinerungsanlage vorzusehen, die kontinuierlich oder diskontinuierlich während der hydro-thermalen Behandlung eine Zerkleinerung durchführt.

Eine weitere Möglichkeit besteht darin, eine Wärmebehandlungseinrichtung, insbesondere kontinuierlich, zu betreiben und während der hydro-thermalen Behandlung einen Teil des Materials aus der Wärmebehandlungseinrichtung auszuschleusen, zu zerkleinern und wiederum in diese einzuschleusen. Dies bietet sich insbesondere an, wenn das Ausgangsprodukt in einer Suspension in der Wärmebehandlungseinrichtung vorhanden ist oder zumindest in einer pumpbaren Form. Dann kann beispielsweise eine Leitung aus einem Autoklav vorgesehen sein, die zu einer Zerkleinerungseinrichtung wie einer Mühle führt und wieder zurück in den Autoklav, welcher ein Beispiel für eine Wärmebehandlungseinrichtung im Sinne der Erfindung ist. Hierbei kann von einem Kreislaufverfahren ohne Unterbrechung gesprochen werden.

Als weitere Möglichkeit bietet es sich an, dem Ausgangsprodukt bereits zu Beginn, vor oder während dem Homogenisieren oder im Anschluss an das Homogenisieren oder auch erst in der Wärmebehandlungseinrichtung Keimbildner, Mittel zum Anheben des pH-Wertes, Fremdionen und/oder andere Hilfsstoffe zuzugeben, die den Ablauf der Reaktionen beschleunigen.

Als Keimbildner können beispielsweise Brucit, Lizardit, Antigorit, vorhydratisiertes olivinhaltiges Gestein oder Mischungen dieser Stoffe zugegeben werden. Bevorzugt ist die Zugabe von mindestens 2 Mass% an Keimbildnern.

Als Mittel zum Anheben des pH-Wertes, die so eine Lösung modifizieren, in der die Reaktion stattfindet, können Stoffe zugegeben werden, die NaOH, KOH, NaCl, KCl, Na₂SO₄, MgSO₄, K₂SO₄, Na₂CO₃, Ca(OH)₂ und/oder K₂CO₃ nach ihrer Zugabe freisetzen wodurch eine Steigerung des pH-Wertes in der Lösung erfolgt, sodass die Reaktion schneller abläuft.

Weitere Hilfsstoffe, die ebenfalls die Reaktion beschleunigen, sind beispielsweise Magnesit, Hydromagnesit, Nesquehonit, Dolomit, SiO₂, Feldspäte, Pyroxene sowie deren Mischungen, wobei die Zugabe dieser Substanzen zur Bildung neuer Reaktionsprodukte führen kann. Beispiele für Fremdionen sind Aluminium, Sulfat oder Alkalien. Auch hier kann es zur Bildung neuer Reaktionsprodukte kommen.

Um die Reinheit des entstehenden Produktes zur CO₂-Sequestrierung zu erhöhen, können diese Hilfsstoffe zumindest teilweise nach Ablauf der hydro-thermalen Behandlung wieder entfernt werden.

Grundsätzlich kann der Ablauf der Reaktion auch bereits durch eine Temperaturerhöhung realisiert werden. Insbesondere sind hierbei Temperaturen über 150 °C, bevorzugterweise über 200 °C und weiter bevorzugt über 250 °C möglich.

Eine zusätzliche Möglichkeit, die Reaktion zu beschleunigen ist, wenn zum hydro-thermalen Behandeln des homogenisierten Ausgangsproduktes in der Wärmebehandlungseinrichtung das homogenisierte Ausgangsprodukt in einer Suspension vorliegt, welche während der hydro-thermalen Behandlung kontinuierlich oder diskontinuierlich gerührt wird. Hierbei kann beispielsweise ein Rührwerk vorgesehen sein, welches für eine Bewegung der Suspension sorgt.

In diesem Zusammenhang kann auch eine Mahlung alternativ oder zusätzlich vorgesehen sein - wie oben beschrieben. Hierbei bietet sich insbesondere eine Nassmahlung an, so kann ein Teil der Suspension aus der Wärmebehandlungseinrichtung heraustransportiert wird, nassgemahlen wird und wieder in diese zugegeben werden. Die Nassmahlung kann aber auch direkt in der Wärmebehandlungseinrichtung erfolgen.

Eine weitere Alternative ist eine Ultraschallbehandlung des homogenisierten Ausgangsproduktes. Hierbei wird in ähnlicher Weise wie beim Zerkleinern dafür gesorgt, dass sich an dem Ausgangsprodukt gebildete Stoffe wie Magnesiumhydroxid und/oder Magnesiumsilikathydrat von den restlichen Stoffen des Ausgangsproduktes trennen, so dass wiederum eine ausreichend große Oberfläche vorhanden ist, um einen zügigen Ablauf der Reaktion zu ermöglichen. Dies kann beispielsweise durch ein Ultraschallhorn oder dergleichen erfolgen.

Je nach gewünschter weiterer Behandlung und Verarbeitung des homogenisierten und umgewandelten Ausgangsproduktes kann es sinnvoll sein, vor dem Schritt des Entwässerns, also dem Abtrennen von gebundenem Wasser, eine Trocknung zum Entfernen von ungebundenem Wasser durchzuführen. Dies ist insbesondere dann angezeigt und sinnvoll, wenn die hydro-thermale Behandlung des Ausgangsproduktes in einer wässrigen Suspension durchgeführt wurde.

Das getrocknete Ausgangsprodukte kann dann dem Entwässerungsschritt zugeführt werden. Das hierzu vorgeschlagene thermische Behandeln kann auch als Tempern oder Kalzinieren bezeichnet werden. Es kann in einem Drehrohrofen oder mittels einer zirkulierenden Wirbelschicht heißer Gase erfolgen. Beim Verwenden einer Wirbelschicht tritt das Entwässern innerhalb einiger Sekunden ein. Alternativ kann die notwendige Energie auch elektrisch beispielsweise in einem Muffelofen aufgebracht werden. Hier sind Zeiten von etwa 5 min bis 10 min notwendig. Grundsätzlich sind offene System beispielsweise mit Flammen zu bevorzugen, da es hier einfacher ist, den entstehenden Wasserdampf abzufördern, wodurch die Reaktion schneller abläuft.

Grundsätzlich reicht es aus, wenn das umgewandelte und entwässerte Ausgangsprodukt mit CO₂, wie es beispielsweise in der Luft vorhanden ist, kontaktiert wird, damit dieses mit dem CO₂ eine Bindung eingeht. Der Bindungsprozess kann jedoch intensiviert und beschleunigt werden, wenn das Kontaktieren des umgewandelten, entwässerten Ausgangsproduktes mit CO₂ in einer wässrigen Suspension durch Einblasen von CO₂-haltigem Gas wie beispielsweise Luft durchgeführt wird. Es hat sich gezeigt, dass durch diesen Verfahrensschritt eine schnellere Bindung des CO₂ möglich ist als bei einem reinen Behandeln mit normaler Umgebungsluft in Abwesenheit von Wasser.

Das Kontaktieren des umgewandelten, entwässerten Ausgangsproduktes mit einem CO₂-haltigen Gas kann bei Partialdrücken von mindestens 200 ppm, 400 ppm, 1000 ppm, 10 000 ppm, 100 000 ppm, 200 000 ppm insbesondere bereits bei Raumdruck oder im Bereich von maximal 2 bar, was 2 Millionen ppm entspricht, durchgeführt werden. Es ist entsprechend der Erfindung nicht notwendig, hohe Drücke vorzusehen, damit eine schnelle und ausreichende Bindung des CO₂ vollzogen wird. Jedoch wird durch höhere Partialdrücken die Bindung des CO₂ noch weiter beschleunigt.

Zum Bereitstellen des Ausgangsproduktes mit einer Feinheit entsprechend einer BET-Oberfläche von 0,1 m²/g oder feiner ist es bevorzugt, wenn das Ausgangsprodukt einer Mahlung, insbesondere einer Nassmahlung, unterzogen wird. Das Ausgangsprodukt liegt meist - auch wenn es zum Teil durch natürliche Verwitterung bereits sehr fein ist - nicht in einer höheren Feinheit vor. Durch eine Mahlung ist diese Feinheit einfach zu erhöhen. Bevorzugt ist auch hierbei eine Nassmahlung, da diese oft energieeffizienter ist als eine Trockenmahlung. Da das Ausgangsprodukt im Anschluss einer hydro-thermalen Behandlung unterzogen wird, bei der es mit Wasser kontaktiert wird, kann der Vorteil einer Nassmahlung bereits in diesem Schritt genutzt werden, insbesondere da das Mahlgut nicht getrocknet werden muss.

Das umgewandelte und entwässerte Ausgangsprodukt kann vor dem Binden des CO₂ als Bindemittel, beispielsweise als komplettes oder teilweisen Zementsubstitut, für die Betonherstellung verwendet werden. Hierbei liegt das Wasser-Bindemittel-Verhältnis bevorzugt im Bereich von 1 : 2 oder kleiner. Dies bedeutet, dass das Verhältnis liegt bei 1 : 2,22, bevorzugt bei 1 : 2,5 und im Idealfall bei 1 : 2,86 und noch besser bei 1 : 3,33 oder kleiner. Es hat sich herausgestellt, dass ein höheres Verhältnis, also ein höherer Wasseranteil die Erhärtung in die Länge zieht und sich die Festigkeit verringert. Der so hergestellte Beton bindet bereits bei Raumluft und Raumtemperatur CO₂ aus dem Umgebungsluft. Grundsätzlich kann durch eine Wärme- oder Druckbehandlung die Bindung noch beschleunigt werden.

In einer alternativen Ausführungsform kann das umgewandelte, entwässerte und CO₂-gebundene Ausgangsprodukt bevorzugt verfestigt werden oder sein und als Gesteinskörnung oder Füller der Herstellung von Beton und/oder Mörtel zugeführt werden. Nach dem Binden des CO₂ kann eine erneute Trocknung erfolgen. Dies ist aber nicht zwingend notwendig, da sich bereits beim Binden des CO₂ aus dem umgewandelte und entwässerte Ausgangsprodukt ein Feststoff bildet beziehungsweise die Festigkeit des erhärteten Materials weiter zunimmt.

Das entstehende Material ist inert und bietet sich an, zusammen mit einem hydraulischen Bindemittel, wie Zementklinker, zu Beton weiterverarbeitet zu werden. Hierzu kann eine weitere Zerkleinerung notwendig sein. Grundsätzlich ist es für den Ablauf des erfindungsgemäßen Verfahrens vorteilhaft, wenn zumindest das Ausgangsprodukt zementklinkerfrei ist. Dies kann insbesondere bedeuteten, dass es keine oder kaum (weniger als 0,1 Mass%) Alit- und/oder Belit-Phasen aufweist. Erfahrungsgemäß verlangsamen die im Zementklinker vorhandenen Materialien teilweise die hier erläuterten Reaktionen, so dass die Anwesenheit nicht wünschenswert ist. In geringen Mengen ist Zementklinker jedoch unschädlich.

Optional kann zusätzlich eine Zumischung weiterer Stoffe vorgenommen werden, die die Reaktionsfähigkeit verbessern oder die Eigenschaften des erhärteten Materials modifizieren. Zu diesen Stoffen gehören organische Zusatzmittel, insbesondere Fließmittel, Gesteinsmehle, insbesondere Kalkstein, Dolomit und Olivin, puzzolanische Zusatzstoffe wie Trass, Glasmehl, Steinkohlenflugasche und/oder thermisch aktivierte Tone.

Die entsprechend der Erfindung vorgesehenen Ausgangsprodukte sind meist keine Reinstoffe, so dass Verunreinigungen in hohem Maße vorliegen. Es ist jedoch vorteilhaft, wenn zumindest das molare Verhältnis von Mg zu Ca 10:1 oder größer und/oder das molare Verhältnis von Si zu Al ebenfalls 10:1 oder größer ist. Es hat sich gezeigt, dass die Anwesenheit von Kalzium sowie Aluminium jeweils in Bezug auf Magnesium beziehungsweise Silizium die Reaktionen verlangsamt beziehungsweise teilweise komplett zum Erliegen bringt. Daher ist es nicht unwesentlich, die entsprechenden molaren Verhältnisse deutlich in Richtung von Magnesium beziehungsweise Silizium zu verschieben. Bevorzugt liegt das molare Verhältnis von Mg zu Ca bei mindestens 20:1 und/oder das molare Verhältnis von Si zu Al bei mindestens 20:1.

Die Erfindung wird nachfolgend anhand von Ausführungsbeispielen unter Bezugnahme auf die Figuren näher erläutert. In den Figuren zeigt:
- Fig. 1: einen Hydratationsverlauf eines mittels des erfindungsgemäßen Verfahrens hergestellten Produktes; und
- Fig. 2: einen Verlauf einer CO₂-Konzentration während des Bindens von CO₂ durch ein mittels des erfindungsgemäßen Verfahrens hergestellten Produktes.

Zur Verifikation der Erfindung wurden unter anderem die im Folgenden näher erläuterten Untersuchungen durchgeführt. Hierbei wurde zum einen reiner Forsterit in der ersten Untersuchung und natürlicher Olivin in der zweiten Untersuchung verwendet.

### Reiner Forsterit

Für die erste Untersuchung wurde reiner Forsterit (Mg₂SiO₄) verwendet, der durch Brennen einer Mischung aus Magnesiumhydroxidkarbonat und amorphen SiO₂ im Laborofen hergestellt wurde. Nach dem Brennen wurde der Ausgangsstoff in einer Scheibenschwingmühle aufgemahlen. Die spezifische Oberfläche nach dem BET-Verfahren betrug 1 m²/g.

Es wurde eine Mischung aus Forsterit und 1-molarer NaOH-Lösung im Verhältnis 1:2,2 hergestellt und in einem Autoklav bei einer Temperatur von 200°C behandelt. Zwischenzeitlich wurde die Reaktion unterbrochen und das Material getrocknet und aufgemahlen. Nach einer Behandlungsdauer von 4 Wochen war in dem behandelten und gewaschenen Material kein Forsterit mittels Röntgenphasenanalyse mehr nachweisbar. Der Glühverlust nach Abschluss der Autoklavbehandlung betrug 19,3 Mass%.

Von dem getrockneten und aufgemahlenen Material wurden 3,0 g in einem Platintiegel bei einer Temperatur von 450°C, 600°C beziehungsweise 750°C für jeweils eine Stunde in einem Muffelofen gebrannt. Die Proben wiesen einen Glühverlust von 13,5% (450°C), 2,8% (600°C) beziehungsweise 0,52% (750°C) auf.

### Sequestrierung

Dieses Material wurde zur Sequestrierung von CO₂ verwendet. Dazu wurde 1 g der bei 600°C gebrannten Probe in ein Becherglas mit 50 g Wasser gegeben und die Suspension kontinuierlich gerührt. Gleichzeitig wurde gasförmiges CO₂ (Konzentration 100%) in die Suspension eingeleitet. Nach 6 Stunden wurde die Suspension durch Filtration getrennt und der Feststoff nach der Trocknung mittels Röntgenbeugung und ²⁹Si MAS **NMR** untersucht.

Die Röntgenphasenanalyse zeigte Nesquehonit (MgCO₃ · 3H₂O) als einziges kristallines Reaktionsprodukt. Mittels ²⁹Si MAS **NMR** konnte gezeigt werden, dass das gesamte Silizium als amorphes SiO₂ vorlag. Damit kann folgende Reaktion nachgewiesen werden, wobei nur Ausgangs- und Endzustand dargestellt und die Zwischenschritte weggelassen sind:

Mg₂SiO₄ + 6 H₂O + 2 CO₂ → 2 MgCO₃ · 3H₂O + SiO₂

Dementsprechend kann eine Sequestrierung von Kohlendioxid mit dem erfindungsgemäßen Verfahren erfolgen.

### Bindemittel

Die Reaktionsfähigkeit des Materials vor der Sequestrierung als Bindemittel wurde durch die Bestimmung der Wasserbindung nach 7 Tagen Hydratation untersucht. Dazu wurden die bei unterschiedlichen Temperaturen gebrannten Materialien im Handmörser aufgemahlen und unter Verwendung eines Wasser-Bindemittel-Verhältnisses von 0,50 (1:2) mit Wasser gemischt und für 7 Tage in abgeschlossenen Gefäßen bei 22°C gelagert. Danach wurde die Hydratation der Proben durch Trocknung bei 60°C abgestoppt und die Glühverluste mittels Thermoanalyse bestimmt.

Dabei ergaben sich Glühverluste von 20,5% (450°C), 25,3% (600°C) beziehungsweise 7,1% (750°C). Dementsprechend haben alle drei Bindemittel hydratisiert und Wasser gebunden.

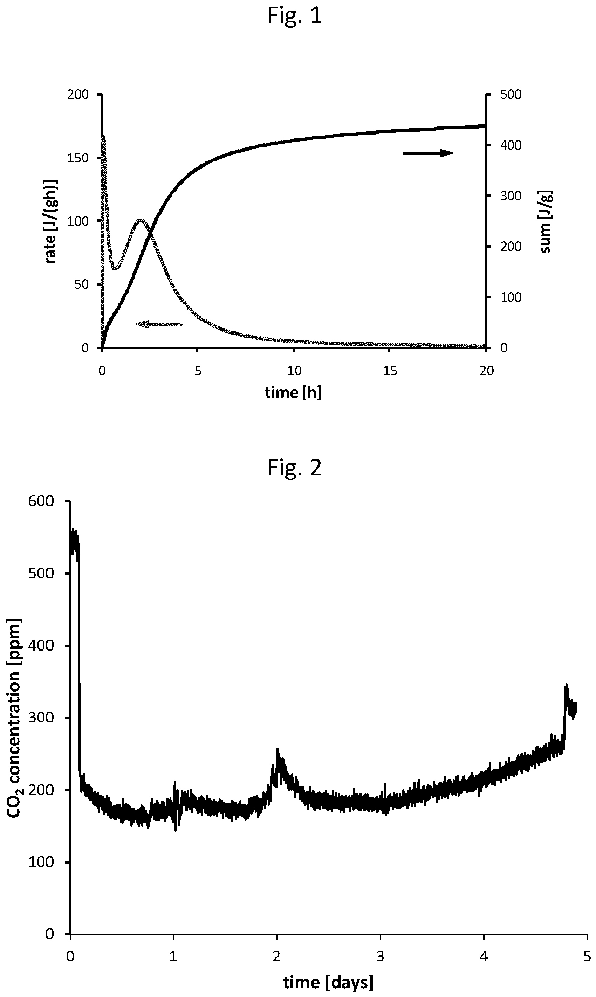

Der Hydratationsverlauf der bei 600°C gebrannten Probe wurde mittels Kalorimetrie (DCA) bei 25°C untersucht. Dabei zeigte sich eine sehr schnelle Reaktion mit einem Maximum der Haupthydratationsphase nach etwa 2 Stunden wobei die Reaktion nach weniger als 24 Stunden abgeschlossen war. Insgesamt wurde eine Wärme von etwa 450 J/g freigesetzt wie in Fig. 1 gezeigt.

Demzufolge reagiert das Bindemittel schneller als die meisten konventionellen Zemente. Eine Untersuchung der hydratisierten und getrockneten Probe nach der DCA-Analyse mittels ²⁹Si MAS **NMR** Spektroskopie zeigte, dass das gesamte Silizium als Magnesiumsilikathydrat vorlag.

### Natürlicher Olivin

Für die zweite Untersuchung wurde natürlicher Olivin aus einer Fundstelle in Norwegen verwendet. Dessen chemische Analyse ergab die folgende Zusammensetzung: 41,9% SiO₂, 49,9% MgO, 6,9% Fe₂O₃, 0,6% Al₂O₃, 0,1% CaO, 0,5% Glühverlust.

Das Material wurde in einer Kugelmühle auf eine Feinheit von 7300 cm²/g Blaine auf gemahlen und in einem Verhältnis von 1:2 mit 1-molarer NaOH-Lösung gemischt. Es erfolgte eine Autoklav-Behandlung bei 200°C für 22 Tage, wobei diese für eine Aufmahlung des Materials einmal unterbrochen wurde.

Nach der Autoklavbehandlung wurde das Zwischenprodukt getrocknet, gemahlen und der Glühverlust analysiert (16,3 %).

### Sequestrierung

Anschließend wurde die Sequestrierung von Kohlenstoffdioxid untersucht. Dazu wurden 10 g eines bei 600°C gebrannten Zwischenprodukt verwendet, welches nach der thermischen Behandlung für 4 Minuten in der Scheibenschwingmühle bei 700 Umdrehungen pro Minuten unter Zugabe von Triethanolamin gemahlen worden war. Der erfindungsgemäß vorbehandelte Olivin wurde in 1 Liter Wasser gegeben und kontinuierlich gerührt. In diese Suspension wurde normale Umgebungsluft mit einer einfachen Aquariumspumpe eingeblasen. Umgebungsluft weist eine CO₂-Konzentration etwa 400 ppm auf. In geschlossenen Räumen ist die CO₂-Konzentration meist etwas höher und beträgt meist 500 bis 600 ppm.

Während des Experimentes wurde die CO₂-Konzentration in der Luft gemessen, welche aus der Suspension aufstieg. Diese sank kontinuierlich während des Experimentes sehr schnell auf eine Konzentration von etwa 200 ppm ab. Es konnte über mehrere Tage Kohlendioxid aus der eingebrachten Luft entfernt werden. Demensprechend ist das Material in der Lage mit CO₂ aus der Luft zu reagieren und dieses in Form von Magnesiumkarbonat dauerhaft zu binden. Dies ist in Fig.2 dargestellt.

### Bindemittel

Einzelne Chargen des Zwischenproduktes wurden bei verschiedenen Temperaturen gebrannt und die Wasserbindung durch Hydratation für 7 Tage bei 22°C untersucht. Vor der Hydratation waren die Glühverluste (6,8% nach 550°C, 3,1% nach 600°C, 2,2% nach 650°C, 1,7% nach 700°C) geringer als nach der Reaktion mit Wasser und anschließender Trocknung bei 60°C (20,1% nach 550°C, 23,7% nach 600°C, 24,7% nach 650°C, 22,8% nach 700°C).

Demzufolge kann auch natürliches Material wie Olivin für eine Bindemittelherstellung verwendet werden wobei eine Hydratation nach der beschriebenen Vorbehandlung nachgewiesen werden konnte.

Demnach konnte gezeigt werden, dass es mittels des erfindungsgemäßen Verfahrens möglich ist, CO₂ auf effiziente Weise zu binden. Zusätzlich ist es möglich, als Nebenprodukt ein Bindemittel für die Betonherstellung herzustellen, welches ebenfalls zur CO₂-Sequestration verwendet werden kann.

## Patentansprüche

1. Verfahren zur Sequestrierung von CO₂ aufweisend die Schritte:
a) Bereitstellen eines Ausgangsproduktes aufweisend mindestens 20 Mass% eines oder mehrere der folgenden Bestandteile:
• ultramafische Gesteine, insbesondere Dunit,
• Verwitterungsprodukte ultramafischer Gesteine, insbesondere Serpentinit,
• Olivin,
• industrielle Anfallstoffe
jeweils mit einer MgO-Konzentration von mindestens 10 Mass% und mit einer Feinheit entsprechend einer BET-Oberfläche von 0,1 m²/g oder feiner,
b) Homogenisieren des Ausgangsproduktes,
c) hydro-thermales Behandeln des homogenisierten Ausgangsproduktes in einer Wärmebehandlungseinrichtung bei einer Temperatur von über 100°C für mindestens 24 Stunden,
d) Wasserzugabe zu dem homogenisierten Ausgangsprodukt durch direkte Wasserzugabe vor, nach und/oder zeitgleich mit dem Homogenisieren in Schritt b) und Vermischen des Wassers mit dem Ausgangsprodukt und/oder Einbringen von Wasserdampf in die Wärmebehandlungseinrichtung,
wobei nach Schritt c) das Ausgangsprodukt zumindest teilweise unter Anwesenheit von H₂O in Magnesiumhydroxid Mg(OH)₂ und/oder Magnesiumsilikathydrat umwandelt wurde,
e) zumindest teilweises Entwässern des umgewandelten Ausgangsproduktes von gebundenem Wasser mittels thermischer Behandlung und/oder Reaktionsmahlen,
• wobei beim thermischen Behandeln das umgewandelte Ausgangsprodukt bei einer Temperatur zwischen 180°C und 1000°C behandelt wird,
• wobei beim Reaktionsmahlen eine Umordnung der Kristallstrukturen im umgewandelten Ausgangsproduktes eintritt,
wobei nach Schritt e) im umgewandelten, entwässerten Ausgangsprodukt vorhandenes Magnesiumhydroxid zumindest teilweise in Magnesiumoxid und vorhandenes Magnesiumsilikathydrat zumindest teilweise entwässert wird und dabei in entwässertes Magnesiumsilikathydrat umwandelt werden kann,
f) Kontaktieren des umgewandelten, entwässerten Ausgangsproduktes mit CO₂, wobei CO₂ mit dem Magnesiumoxid, dem entwässerten Magnesiumsilikathydrat, und/oder dem Magnesiumhydroxid reagiert und das CO₂ in entstehendem Magnesiumcarbonat und/oder Magnesiumcarbonathydrat gebunden wird.

2. Verfahren nach Anspruch 1,
dadurch**gekennzeichnet,**
dass zum zumindest teilweisen Umwandeln des Ausgangsproduktes in Schritt c) eine oder mehrere Behandlungen zur Beschleunigung der während der hydro-thermalen Behandlung ablaufenden Reaktionen durchgeführt werden.

3. Verfahren nach Anspruch 1 oder 2,
dadurch**gekennzeichnet,**
dass während der hydro-thermalen Behandlung oder zwischen mehreren hydro-thermalen Behandlungen in der Wärmebehandlungseinrichtung in Schritt c) das homogenisierte Ausgangsprodukt zur Beschleunigung der Umwandlung kontinuierlich oder diskontinuierlich zerkleinert wird, insbesondere feinstgemahlen.

4. Verfahren nach einem der Ansprüche 1 bis 3,
dadurch**gekennzeichnet,**
dass Keimbildner, Mittel zum Anheben des pH-Wertes, Fremdionen und/oder Hilfsstoffe, dem Ausgangsprodukt in Schritt a), b), c) und/oder d) zugegeben werden.

5. Verfahren nach Anspruch 4,
dadurch**gekennzeichnet,**
dass nach Schritt c) die Hilfsstoffe zumindest teilweise wieder entfernt werden.

6. Verfahren nach einem der Ansprüche 1 bis 5,
dadurch**gekennzeichnet,**
dass zum hydro-thermalen Behandeln des homogenisierten Ausgangsproduktes in der Wärmebehandlungseinrichtung das homogenisierte Ausgangsprodukt in einer Suspension vorliegt, welche während der hydro-thermalen Behandlung kontinuierlich und/oder diskontinuierlich gerührt wird.

7. Verfahren nach einem der Ansprüche 1 bis 6,
dadurch**gekennzeichnet,**
dass in Schritt c) eine Ultraschallbehandlung des homogenisierten Ausgangsproduktes durchgeführt wird.

8. Verfahren nach einem der Ansprüche 1 bis 7,
dadurch**gekennzeichnet,**
dass das Kontaktieren des umgewandelten, entwässerten Ausgangsproduktes mit CO₂ in Schritt f) in einer wässrigen Suspension durch Einblasen von CO₂-haltigem Gas durchgeführt wird.

9. Verfahren nach einem der Ansprüche 1 bis 8,
dadurch**gekennzeichnet,**
dass das Kontaktieren des umgewandelten, entwässerten Ausgangsproduktes mit einem CO₂-haltigem Gas bei Partialdrücken von mindestens 200 ppm, insbesondere bei Raumdruck, durchgeführt wird.

10. Verfahren nach einem der Ansprüche 1 bis 9,
dadurch**gekennzeichnet,**
dass das umgewandelte Ausgangsprodukt vor Schritt e) einer Trocknung zum Entfernen von ungebundenem Wasser unterzogen wird.

11. Verfahren nach einem der Ansprüche 1 bis 10,
dadurch**gekennzeichnet,**
dass zum Bereitstellen des Ausgangsproduktes mit einer Feinheit entsprechend einer BET-Oberfläche von 0,1 m²/g oder feiner, das Ausgangsprodukt einer Mahlung, insbesondere einer Nassmahlung, unterzogen wird.

12. Verfahren nach einem der Ansprüche 1 bis 11,
dadurch**gekennzeichnet,**
dass nach Schritt f), das umgewandelte, entwässerte und CO₂-gebundene Ausgangsprodukt verfestigt ist/wird und als Gesteinskörnung oder als Füller der Herstellung von Beton und/oder Mörtel zugeführt wird.

13. Verfahren nach einem der Ansprüche 1 bis 12,
dadurch**gekennzeichnet,**
dass nach Schritt e) das umgewandelte, entwässerte Ausgangsprodukt als Bindemittel für die Betonherstellung verwendet wird, wobei das Wasser-Bindemittel Verhältnis 1:2 oder kleiner beträgt.

14. Verfahren nach einem der Ansprüche 1 bis 13,
dadurch**gekennzeichnet,**
dass das Ausgangsprodukt ein molares Verhältnis von Mg zu Ca von 10:1 oder größer und/oder ein molares Verhältnis von Si zu Al von 10:1 oder größer aufweist.

## Claims

1. Method for sequestering CO₂, comprising the steps of:
a) providing a starting product comprising at least 20 % by mass of one or more of the following components:
• ultramafic rocks, especially dunite,
• weathering products of ultramafic rocks, especially serpentinite,
• olivine,
• industrial waste materials,
each with an MgO concentration of at least 10 % by mass and with a fineness corresponding to a **BET** surface area of 0.1 m²/g or finer,
b) homogenizing the starting product,
c) hydro-thermally treating the homogenized starting product in a heat treatment apparatus at a temperature of more than 100 °C for at least 24 hours,
d) adding water to the homogenized starting product by adding water directly before, after and/or simultaneously with the homogenization in step b) and mixing the water with the starting product and/or introducing steam into the heat treatment apparatus,
wherein after step c) the starting product was at least partially converted into magnesium hydroxide Mg(OH)₂ and/or magnesium silicate hydrate in the presence of H₂O,
e) at least partial dewatering of the converted starting product from bound water by means of thermal treatment and/or reaction milling,
• wherein the converted starting product is treated at a temperature between 180 °C and 1000 °C during thermal treatment,
• wherein a rearrangement of the crystal structures in the converted starting product occurs during reaction grinding,
wherein, after step e), magnesium hydroxide present in the converted, dewatered starting product is at least partially dewatered into magnesium oxide, and magnesium silicate hydrate present is at least partially dewatered and can thereby be converted into dewatered magnesium silicate hydrate,
f) contacting the converted, dewatered starting product with CO₂, wherein CO₂ reacts with the magnesium oxide, the dewatered magnesium silicate hydrate and/or the magnesium hydroxide and the CO₂ is bound in the resulting magnesium carbonate and/or magnesium carbonate hydrate.

2. Method according to claim 1,
**characterized in that**
for at least partial conversion of the starting product in step c), one or more treatments are carried out to accelerate the reactions taking place during the hydrothermal treatment.

3. Method according to claim 1 or 2,
**characterized in that**
during the hydro-thermal treatment or between several hydro-thermal treatments in the heat treatment apparatus in step c), the homogenized starting product is continuously or discontinuously crushed, in particular finely ground, to accelerate the conversion.

4. Method according to any one of claims 1 to 3,
**characterized in that**
nucleating agents, agents for raising the pH value, foreign ions and/or auxiliary substances are added to the starting product in step a), b), c) and/or d).

5. Method according to claim 4,
**characterized in that**
after step c) the auxiliary substances are at least partially removed again.

6. Method according to any one of claims 1 to 5,
**characterized in that**
for hydro-thermal treatment of the homogenized starting product in the heat treatment apparatus, the homogenized starting product is present in a suspension which is stirred continuously and/or discontinuously during the hydrothermal treatment.

7. Method according to any one of claims 1 to 6,
**characterized in that**
in step c), an ultrasonic treatment of the homogenized starting product is carried out.

8. Method according to any one of claims 1 to 7,
**characterized in that**
the contacting of the converted, dewatered starting product with CO₂ in step f) is carried out in an aqueous suspension by blowing in CO₂-containing gas.

9. Method according to any one of claims 1 to 8,
**characterized in that**
the contacting of the converted, dewatered starting product with a gas containing CO₂ is carried out at partial pressures of at least 200 ppm, in particular at room pressure.

10. Method according to any one of claims 1 to 9,
**characterized in that**
the converted starting product is subjected to drying to remove unbound water before step e).

11. Method according to any one of claims 1 to 10,
**characterized in that**,
in order to provide the starting product with a fineness corresponding to a BET surface area of 0.1 m²/g or finer, the starting product is subjected to grinding, in particular wet grinding.

12. Method according to any one of claims 1 to 11,
**characterized in that**
after step f), the converted, dewatered and CO₂-bound starting product is/becomes solidified and is fed as an aggregate or as a filler for the production of concrete and/or mortar.

13. Method according to any one of claims 1 to 12,
**characterized in that**
after step e) the converted, dewatered starting product is used as a binder for the production of concrete, wherein the water-binder ratio is 1:2 or less.

14. Method according to any one of claims 1 to 13,
**characterized in that**
the starting product has a molar ratio of Mg to Ca of 10:1 or greater and/or a molar ratio of Si to Al of 10:1 or greater.

## Revendications

1. Procédé de séquestration de CO₂ présentant les étapes suivantes :
a) la fourniture d'un produit de départ présentant au moins 20 % en masse d'un ou plusieurs des constituants suivants :
• roches ultramafiques, notamment dunite,
• produits d'altération de roches ultramafiques, notamment serpentinite,
• olivine,
• déchets industriels,
chacun avec une concentration en MgO d'au moins 10 % en masse et avec une finesse correspondant à une surface BET de 0,1 m²/g ou plus fine,
b) l'homogénéisation du produit de départ,
c) le traitement hydrothermique du produit de départ homogénéisé dans un dispositif de traitement thermique à une température supérieure à 100 °C pendant au moins 24 heures,
d) l'ajout d'eau au produit de départ homogénéisé par ajout direct d'eau avant, après et/ou simultanément à l'homogénéisation à l'étape b) et le mélange de l'eau avec le produit de départ et/ou l'introduction de vapeur d'eau dans le dispositif de traitement thermique,
après l'étape c), le produit de départ ayant été transformé en présence d'H₂O au moins partiellement en hydroxyde de magnésium Mg(OH)₂ et/ou en hydrate de silicate de magnésium,
e) la déshydratation au moins partielle du produit de départ transformé de l'eau liée au moyen d'un traitement thermique et/ou d'un broyage réactionnel,
• le produit de départ transformé étant traité à une température comprise entre 180 °C et 1 000 °C lors du traitement thermique,
• un réarrangement des structures cristallines dans le produit de départ transformé se produisant lors du broyage réactionnel,
après l'étape e), l'hydroxyde de magnésium présent dans le produit de départ transformé déshydraté étant au moins partiellement déshydraté en oxyde de magnésium et l'hydrate de silicate de magnésium présent étant au moins partiellement déshydraté et pouvant ainsi être transformé en hydrate de silicate de magnésium déshydraté,
f) la mise en contact du produit de départ transformé déshydraté avec du CO₂, le CO₂ réagissant avec l'oxyde de magnésium, l'hydrate de silicate de magnésium déshydraté et/ou l'hydroxyde de magnésium, et le CO₂ étant lié dans le carbonate de magnésium et/ou l'hydrate de carbonate de magnésium qui se forme.

2. Procédé selon la revendication 1,
**caractérisé en ce que**,
pour transformer au moins partiellement le produit de départ dans l'étape c), un ou plusieurs traitements sont effectués pour accélérer les réactions se déroulant pendant le traitement hydrothermique.

3. Procédé selon la revendication 1 ou 2,
**caractérisé en ce que**,
pendant le traitement hydrothermique ou entre plusieurs traitements hydrothermiques dans le dispositif de traitement thermique à l'étape c), le produit de départ homogénéisé est concassé de manière continue ou discontinue, notamment broyé très finement, afin d'accélérer la transformation.

4. Procédé selon l'une quelconque des revendications 1 à 3,
**caractérisé en ce que**
des agents de nucléation, des agents pour augmenter le pH, des ions étrangers et/ou des adjuvants sont ajoutés au produit de départ dans les étapes a), b), c) et/ou d).

5. Procédé selon la revendication 4,
**caractérisé en ce qu'**
après l'étape c), les adjuvants sont au moins partiellement éliminés.

6. Procédé selon l'une quelconque des revendications 1 à 5,
**caractérisé en ce que**,
pour le traitement hydrothermique du produit de départ homogénéisé dans le dispositif de traitement thermique, le produit de départ homogénéisé se présente dans une suspension qui est agitée de manière continue et/ou discontinue pendant le traitement hydrothermique.

7. Procédé selon l'une quelconque des revendications 1 à 6,
**caractérisé en ce qu'**
à l'étape c), un traitement par ultrasons du produit de départ homogénéisé est effectué.

8. Procédé selon l'une quelconque des revendications 1 à 7,
**caractérisé en ce que**
la mise en contact du produit de départ transformé déshydraté avec du CO₂ à l'étape f) est effectuée dans une suspension aqueuse par injection d'un gaz contenant du CO₂.

9. Procédé selon l'une quelconque des revendications 1 à 8,
**caractérisé en ce que**
la mise en contact du produit de départ transformé déshydraté avec un gaz contenant du CO₂ est effectuée à des pressions partielles d'au moins 200 ppm, notamment à la pression ambiante.

10. Procédé selon l'une quelconque des revendications 1 à 9,
**caractérisé en ce que**
le produit de départ transformé est soumis à un séchage avant l'étape e) afin d'éliminer l'eau non liée.

11. Procédé selon l'une quelconque des revendications 1 à 10,
**caractérisé en ce que**
pour fournir le produit de départ avec une finesse correspondant à une surface SET de 0,1 m²/g ou plus fine, le produit de départ est soumis à un broyage, notamment un broyage humide.

12. Procédé selon l'une quelconque des revendications 1 à 11,
**caractérisé en ce qu'**
après l'étape f), le produit de départ transformé, déshydraté et lié au CO₂ est/devient solidifié et est acheminé en tant que granulats ou en tant que charge vers la fabrication de béton et/ou de mortier.

13. Procédé selon l'une quelconque des revendications 1 à 12,
**caractérisé en ce qu'**
après l'étape e), le produit de départ transformé déshydraté est utilisé en tant que liant pour la fabrication de béton, le rapport eau/liant étant de 1:2 ou inférieur.

14. Procédé selon l'une quelconque des revendications 1 à 13,
**caractérisé en ce que**
le produit de départ présente un rapport molaire Mg sur Ca de 10:1 ou supérieur et/ou un rapport molaire Si sur Al de 10:1 ou supérieur.
